# EUROPEAN PATENT APPLICATION

(11) **EP 4 779 349 A1**
(43) Date of publication of application: **22.07.2026**
(21) Application number: 25152147.2
(22) Date of filing: 16.01.2025
(51) Int. Cl.: G01S 7/02, G01S 7/04, G01S 7/41

(54) **DEVICE AND METHOD FOR RADAR PULSE ANALYSIS WITH RESPECT TO A RADAR SIGNAL**

(71) Applicant: Rohde & Schwarz GmbH & Co. KG, 81671 München (DE)
(72) Inventor: Guezelarslan, Baris, 81735 Munich (DE); Celik, Mert, 81673 Munich (DE)
(74) Representative: Rupp, Christian

(57) **Abstract**

A device (10) for radar pulse analysis with respect to a radar signal is provided. Said device (10) comprises a spectrogram capturing unit (11) configured to capture a spectrogram with respect to the radar signal, an analyzing unit (12) configured to identify at least one radar pulse in the spectrogram at least one certain point in time and to analyze respective characteristics of the at least one correspondingly identified radar pulse as radar pulse information, and a display unit (13) configured to display the spectrogram and/or the radar pulse information and/or to superimpose said radar pulse information in the spectrogram, especially such that with respect to the at least one correspondingly identified radar pulse, the radar pulse information is illustrated in the spectrogram in the at least one certain point in time.

## Description

The invention relates to a device for radar pulse analysis with respect to a radar signal and a method for radar pulse analysis with respect to a radar signal.

Generally, in times of an increasing number of applications providing radar capabilities, there is a growing need of a device for radar pulse analysis with respect to a radar signal and a method for radar pulse analysis with respect to a radar signal in order to verify correct functioning of such applications.

Disadvantageously, common radar pulse analysis typically leads to multiple inefficiencies, for example, due to corresponding analysis results are illustrated with the aid of a plurality of lists or list-like structures and/or a plurality of windows, and due to such illustrations do not allow for directly intervening, especially in the sense of modifying or correcting, respectively, with respect to the corresponding analysis results by a user.

For instance, US 6,191,727 B1 discloses apparatus and methods for processing radio frequency (RF) signals. A method according to said document includes receiving a set of time domain energy samples representing signal energy present in an RF spectrum, transforming the set of time domain energy samples into a set of frequency domain power samples, determining from the set of frequency domain power samples whether a signal of interest is present in the RF spectrum, and forwarding to a follow on system a subset of the set of frequency domain power samples, wherein the subset corresponds to the signal of interest. Transforming the time domain samples can include dividing the set of time domain energy samples into a plurality of N windows, each of which is associated with a predefined window period, and performing an FFT on each said window to generate a set of K frequency bins, wherein each frequency bin has a value based on energy present in a predefined frequency band during the corresponding window period. Determining whether the signal is present can include generating an energy map that represents energy present in the RF spectrum as a function of frequency and time. The energy map can be a bitmap having N×K frequency cells, wherein each frequency cell has a binary value based on the value of a corresponding frequency bin. The binary value can be based on whether the value of the corresponding frequency bin exceeds a predefined threshold.

Accordingly, there is the object to provide a device for radar pulse analysis with respect to a radar signal and a method for radar pulse analysis with respect to a radar signal, thereby ensuring a particularly high efficiency.

This object is solved by the features of the first independent claim for a device for radar pulse analysis with respect to a radar signal and the features of the second independent claim for a method for radar pulse analysis with respect to a radar signal. The dependent claims contain further developments.

According to a first aspect of the invention, a device for radar pulse analysis with respect to a radar signal is provided. Said device comprises a spectrogram capturing unit configured to capture a spectrogram with respect to the radar signal, an analyzing unit configured to identify at least one radar pulse in the spectrogram at at least one certain point in time and to analyze respective characteristics of the at least one correspondingly identified radar pulse as radar pulse information, and a display unit configured to display the spectrogram and/or the radar pulse information and/or to superimpose said radar pulse information in the spectrogram, especially such that with respect to the at least one correspondingly identified radar pulse, the radar pulse information is illustrated in the spectrogram in the at least one certain point in time.

Advantageously, a particularly high efficiency can be ensured, especially due to avoidance of illustrating corresponding analysis results with the aid of a plurality of lists or list-like structures and/or a plurality of windows. Further advantageously, not only a better understanding of pulse generation and/or analysis can be achieved, but also an improved post-processing of the corresponding data.

According to an implementation form of the first aspect of the invention, the analyzing unit and/or the display unit is configured to stretch the spectrogram in time, especially in an area of the at least one certain point in time, preferably before the spectrogram and/or the radar pulse information is displayed and/or the radar pulse information is superimposed in the spectrogram.

Advantageously, for instance, errors due to a time resolution of the spectrogram being not as high as in the time domain can efficiently be prevented.

According to an implementation form of the first aspect of the invention, the analyzing unit is configured to form an added information spectrogram comprising the spectrogram and the radar pulse information, preferably wherein said radar pulse information is superimposed in said spectrogram, more preferably wherein said radar pulse information is superimposed in said spectrogram such that with respect to the at least one correspondingly identified radar pulse, the radar pulse information is illustrated in the spectrogram in the at least one certain point in time.

Advantageously, for example, such an added information spectrogram can efficiently be provided for further processing.

According to an implementation form of the first aspect of the invention, the analyzing unit is configured to substitute the spectrogram with the added information spectrogram, preferably before the spectrogram is displayed.

Advantageously, for instance, the corresponding analysis results can be displayed in a very clear and concise manner.

According to an implementation form of the first aspect of the invention, the analyzing unit is configured to store the added information spectrogram, especially with the aid of a memory.

Advantageously, for example, the added information spectrogram can be compared with at least one further added information spectrogram to gain additional insights.

According to an implementation form of the first aspect of the invention, the analyzing unit is configured to output the added information spectrogram, especially with the aid of an interface.

Advantageously, for instance, the added information spectrogram can efficiently be provided for an external device, which may exemplarily perform additional analysis.

According to an implementation form of the first aspect of the invention, the added information spectrogram is formed such that the added information spectrogram is an augmentation and/or decluttering and/or denoising and/or rearrangement of the spectrogram and/or the radar pulse information.

Advantageously, for example, complexity of the corresponding analysis results can further be reduced, thereby increasing efficiency.

According to an implementation form of the first aspect of the invention, the analyzing unit is configured to process and/or post-process the added information spectrogram.

Advantageously, for instance, additional insights can be gained in an automated manner.

According to an implementation form of the first aspect of the invention, the added information spectrogram is processed and/or post-processed based on pattern recognition.

Advantageously, for example, a classification of the corresponding analysis results can be carried out in an efficient manner.

According to an implementation form of the first aspect of the invention, the added information spectrogram is processed and/or post-processed based on a machine-learned model.

Advantageously, for instance, reliability of a classification of the corresponding analysis results can efficiently be improved.

According to an implementation form of the first aspect of the invention, at least a part of the spectrogram and/or the radar pulse information is selectable, especially such that the analyzing unit is configured to form selected information if at least a part of said selectable part is selected by a user or an operating system.

Advantageously, for example, this can allow for directly intervening, especially in the sense of modifying or correcting, respectively, with respect to the corresponding analysis results by a user.

According to an implementation form of the first aspect of the invention, the analyzing unit is configured to process and/or post-process the selected information, especially based on pattern recognition and/or a machine-learned model.

Advantageously, for instance, additional insights can be gained in a particularly efficient manner.

According to an implementation form of the first aspect of the invention, the spectrogram capturing unit is configured to capture again a spectrogram with respect to the radar signal based on the selected information.

Advantageously, for example, the spectrogram can iteratively be captured, especially based on the selected information and/or based on the selected information having been edited by a user or an operating system.

According to an implementation form of the first aspect of the invention, the analyzing unit is configured to identify again at least one radar pulse in the spectrogram at at least one certain point in time and to analyze respective characteristics of the at least one correspondingly identified radar pulse as radar pulse information, especially based on the selected information.

Advantageously, for instance, the radar pulse information can iteratively be obtained, especially based on the selected information and/or based on the selected information having been edited by a user or an operating system.

According to an implementation form of the first aspect of the invention, the display unit is configured to display again the spectrogram and/or the radar pulse information and/or to superimpose said radar pulse information in the spectrogram, especially such that with respect to the at least one correspondingly identified radar pulse, the radar pulse information is illustrated in the spectrogram in the at least one certain point in time.

Advantageously, for example, the added information spectrogram can iteratively be formed, especially based on the selected information and/or based on the selected information having been edited by a user or an operating system.

According to a second aspect of the invention, a method for radar pulse analysis with respect to a radar signal is provided. Said method comprises the steps of capturing a spectrogram with respect to the radar signal, identifying at least one radar pulse in the spectrogram at at least one certain point in time, analyzing respective characteristics of the at least one correspondingly identified radar pulse as radar pulse information, and displaying the spectrogram and/or the radar pulse information and/or superimposing said radar pulse information in the spectrogram, especially such that with respect to the at least one correspondingly identified radar pulse, the radar pulse information is illustrated in the spectrogram in the at least one certain point in time.

Advantageously, a particularly high efficiency can be ensured, especially due to avoidance of illustrating corresponding analysis results with the aid of a plurality of lists or list-like structures and/or a plurality of windows. Further advantageously, not only a better understanding of pulse generation and/or analysis can be achieved, but also an improved post-processing of the corresponding data.

For the sake of completeness, it is noted that all the advantages discussed above with respect to the implementation forms of the first aspect of the invention can analogously apply in the following.

According to an implementation form of the second aspect of the invention, the method further comprises the step of stretching the spectrogram in time, especially in an area of the at least one certain point in time, preferably before the spectrogram and/or the radar pulse information is displayed and/or the radar pulse information is superimposed in the spectrogram.

According to an implementation form of the second aspect of the invention, the method further comprises the step of forming an added information spectrogram comprising the spectrogram and the radar pulse information, preferably wherein said radar pulse information is superimposed in said spectrogram, more preferably wherein said radar pulse information is superimposed in said spectrogram such that with respect to the at least one correspondingly identified radar pulse, the radar pulse information is illustrated in the spectrogram in the at least one certain point in time.

According to an implementation form of the second aspect of the invention, the method further comprises the step of substituting the spectrogram with the added information spectrogram, preferably before the spectrogram is displayed.

According to an implementation form of the second aspect of the invention, the method further comprises the step of storing the added information spectrogram, especially with the aid of a memory.

According to an implementation form of the second aspect of the invention, the method further comprises the step of outputting the added information spectrogram, especially with the aid of an interface.

According to an implementation form of the second aspect of the invention, the added information spectrogram is formed such that the added information spectrogram is an augmentation and /or decluttering and/or denoising and/or rearrangement of the spectrogram and/or the radar pulse information.

According to an implementation form of the second aspect of the invention, the method further comprises the step of processing and/or post-processing the added information spectrogram.

According to an implementation form of the second aspect of the invention, the added information spectrogram is processed and/or post-processed based on pattern recognition.

According to an implementation form of the second aspect of the invention, the added information spectrogram is processed and/or post-processed based on a machine-learned model.

According to an implementation form of the second aspect of the invention, at least a part of the spectrogram and/or the radar pulse information is selectable, especially such that the method further comprises the step of forming selected information if at least a part of said selectable part is selected by a user or an operating system.

According to an implementation form of the second aspect of the invention, the method further comprises the step of processing and/or post-processing the selected information, especially based on pattern recognition and/or a machine-learned model.

According to an implementation form of the second aspect of the invention, the method further comprises the step of capturing again a spectrogram with respect to the radar signal based on the selected information.

According to an implementation form of the second aspect of the invention, the method further comprises the step of identifying again at least one radar pulse in the spectrogram at at least one certain point in time and analyzing respective characteristics of the at least one correspondingly identified radar pulse as radar pulse information, especially based on the selected information.

According to an implementation form of the second aspect of the invention, the method further comprises the step of displaying again the spectrogram and/or the radar pulse information and/or superimposing said radar pulse information in the spectrogram, especially such that with respect to the at least one correspondingly identified radar pulse, the radar pulse information is illustrated in the spectrogram in the at least one certain point in time.

Exemplary embodiments of the invention are now further explained with respect to the drawings by way of example only, and not for limitation. In the drawings:
- Fig. 1: shows an exemplary embodiment of a device for radar pulse analysis with respect to a radar signal;
- Fig. 2: shows a flow chart of an exemplary embodiment of a method for radar pulse analysis with respect to a radar signal;
- Fig. 3: shows an illustration for further illuminating the functioning of the device of Fig. 1 or the method of Fig. 2, respectively;
- Fig. 4: shows a further illustration for further illuminating the functioning of the device of Fig. 1 or the method of Fig. 2, respectively; and
- Fig. 5: shows a further illustration for further illuminating the functioning of the device of Fig. 1 or the method of Fig. 2, respectively, especially in the sense of a particular embodiment.

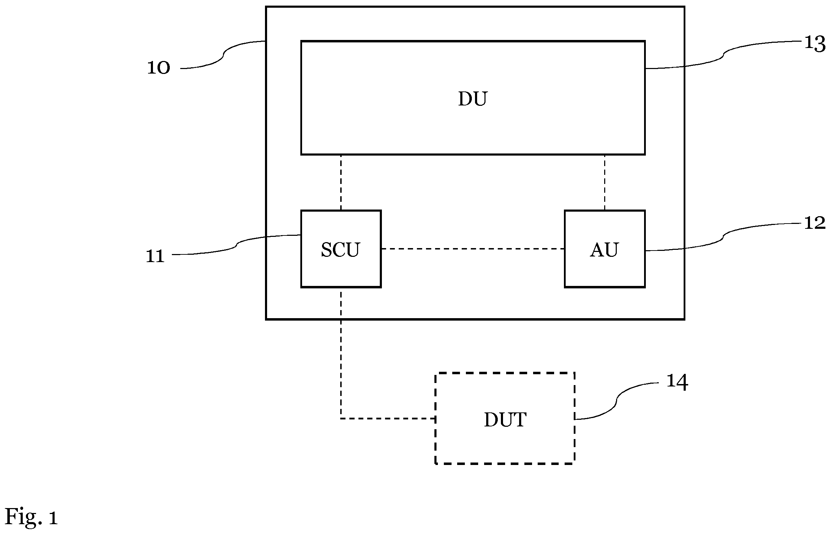

Fig. 1 illustrates an exemplary embodiment of a device 10 for radar pulse analysis with respect to a radar signal. Said device 10 comprises a spectrogram capturing unit 11 configured to capture a spectrogram with respect to the radar signal, an analyzing unit 12 configured to identify at least one radar pulse in the spectrogram at at least one certain point in time and to analyze respective characteristics of the at least one correspondingly identified radar pulse as radar pulse information, and a display unit 13 configured to display the spectrogram and/or the radar pulse information and/or to superimpose said radar pulse information in the spectrogram, especially such that with respect to the at least one correspondingly identified radar pulse, the radar pulse information is illustrated in the spectrogram in the at least one certain point in time.

For the sake of completeness, as it can exemplarily be seen from said Fig. 1, it is noted that the radar signal can be provided by a device under test (DUT) 14.

With respect to the radar pulse information, it is noted that said radar pulse information may especially be radar pulse information in the time domain. Additionally or alternatively, the radar pulse information can comprise at least one of frequency, level, bandwidth, or any combination thereof.

Especially in the context of superimposing said radar pulse information in the spectrogram, it might be particularly advantageous if the analyzing unit 12 is configured to transform the radar pulse information, especially the radar pulse information in the time domain, into the frequency domain, preferably before the radar pulse information is superimposed in the spectrogram.

With respect to said superimposing the radar pulse information in the spectrogram, it is noted that the superimposing the radar pulse information in the spectrogram can comprise or be drawing the radar pulse information in the spectrogram.

It is noted that it might be particularly advantageous if the analyzing unit 12 and/or the display unit 13 is configured to stretch the spectrogram in time, especially in an area of the at least one certain point in time, preferably before the spectrogram and/or the radar pulse information is displayed and/or the radar pulse information is superimposed in the spectrogram.

Advantageously, especially in the context of superimposing and/or drawing the radar pulse information, especially the radar pulse information in the time domain, in the spectrogram, the (original) spectrogram can efficiently be expanded, as the corresponding time resolution may not as high as in the time domain. Furthermore, the radar pulse information can efficiently be transferred to the (new) spectrogram.

Further advantageously, the corresponding measurement or capturing the spectrogram, respectively, and the corresponding radar pulse analysis can be visualized on top of each other. This allows a user to see exactly how the respective pulses were generated and merged.

It is noted that it might be particularly advantageous if the analyzing unit is configured to form an added information spectrogram comprising the spectrogram and the radar pulse information, preferably wherein said radar pulse information is superimposed in said spectrogram, more preferably wherein said radar pulse information is superimposed in said spectrogram such that with respect to the at least one correspondingly identified radar pulse, the radar pulse information is illustrated in the spectrogram in the at least one certain point in time.

With respect to the added information spectrogram, it is noted that said added information spectrogram may especially be understood as a spectrogram with added information. For example, the added information spectrogram can especially be understood as a new spectrogram comprising the original spectrogram and the radar pulse information.

Furthermore, it might be particularly advantageous if the analyzing unit 12 is configured to substitute the spectrogram with the added information spectrogram, preferably before the spectrogram is displayed. Accordingly, the original spectrogram can be replaced by the new spectrogram, preferably before the new spectrogram (and thus also the original spectrogram) is displayed.

Moreover, it might be particularly advantageous if the analyzing unit 12 is configured to store the added information spectrogram, especially with the aid of a memory. Accordingly, the new spectrogram can be stored. The device 10 may comprise said memory.

For the sake of completeness, it is noted that the spectrogram capturing unit 11 can be configured to store the spectrogram or the original spectrogram, respectively, especially with the aid of a further memory or said memory. The device 10 can comprise said further memory.

It might be particularly advantageous if the analyzing unit 12 is configured to output the added information spectrogram, especially with the aid of an interface. For instance, the added information spectrogram or the new spectrogram, respectively, can be outputted as a data stream. The device 10 can comprise said interface. The interface can be a wireless and/or a wired interface.

For the sake of completeness, it is noted that the spectrogram capturing unit 11 can be configured to output the spectrogram or the original spectrogram, respectively, especially with the aid of a further interface or said interface. The device 10 can comprise said further interface.

Furthermore, it might be particularly advantageous if the added information spectrogram or the new spectrogram, respectively, is formed such that the added information spectrogram is an augmentation and/or decluttering and/or denoising and/or rearrangement of the spectrogram and/or the radar pulse information.

It might be particularly advantageous if the analyzing unit 12 is configured to process and/or post-process the added information spectrogram or the new spectrogram, respectively.

Especially in this context, it might be particularly advantageous if the added information spectrogram or the new spectrogram, respectively, is processed and/or post-processed based on pattern recognition.

In addition to this or as an alternative, the added information spectrogram or the new spectrogram, respectively, can be processed and/or post-processed based on a machine-learned model.

Moreover, it might be particularly advantageous if at least a part of the spectrogram and/or the radar pulse information is selectable, especially such that the analyzing unit 12 is configured to form selected information if at least a part of said selectable part is selected by a user or an operating system.

Additionally or alternatively, it might be particularly advantageous if at least a part of the added information spectrogram or of the new spectrogram, respectively, is selectable, especially such that the analyzing unit 12 is configured to form selected information if at least a part of said selectable part is selected by a user or an operating system.

With respect to the selectable part, it is noted that said selectable part can be editable by a user or an operating system. Furthermore, the selected information can be editable and/or edited by a user or an operating system.

It is noted that it might be particularly advantageous if the analyzing unit 12 is configured to process and/or post-process the selected information, especially based on pattern recognition and/or a machine-learned model.

It is further noted that it might be particularly advantageous if the spectrogram capturing unit 11 is configured to capture again a spectrogram with respect to the radar signal based on the selected information.

With respect to the selected information, it is noted that it might be particularly advantageous if said selected information comprises or is pulses created as individual objects and/or pulses created not as pixels.

With respect to the radar pulse information, it is noted that it might be particularly advantageous if said radar pulse information comprises or is pulses created as individual objects and/or pulses created not as pixels.

Said pulses of the selected information or of the radar pulse information, can be editable and/or edited by a user or an operating system. For instance, editing such pulses can comprise at least one of deleting, hiding, moving, assigning to another cluster, or any combination thereof.

Furthermore, it might be particularly advantageous if the analyzing unit 12 is configured to identify again at least one radar pulse in the spectrogram at at least one certain point in time and to analyze respective characteristics of the at least one correspondingly identified radar pulse as radar pulse information, especially based on the selected information.

Advantageously, the pulse analysis can be run again and/or an emitter detection with respect to the radar signal can be triggered, for instance, to allow a user to see how it changes, especially based on the selected information and/or as a result of the selected information having been edited by a user or an operating system.

Accordingly, it might be particularly advantageous if the analyzing unit 12 is configured to perform and/or trigger an emitter detection with respect to the radar signal, especially based on the selected information and/or based on the selected information having been edited by a user or an operating system.

For the sake of completeness, it is noted that it might be particularly advantageous if the display unit 13 is configured to display again the spectrogram and/or the radar pulse information and/or to superimpose said radar pulse information in the spectrogram, especially such that with respect to the at least one correspondingly identified radar pulse, the radar pulse information is illustrated in the spectrogram in the at least one certain point in time.

It is further noted that it might be particularly advantageous if the device 10 is configured to iteratively perform the radar pulse analysis, especially based on the selected information and/or based on the selected information having been edited by a user or an operating system.

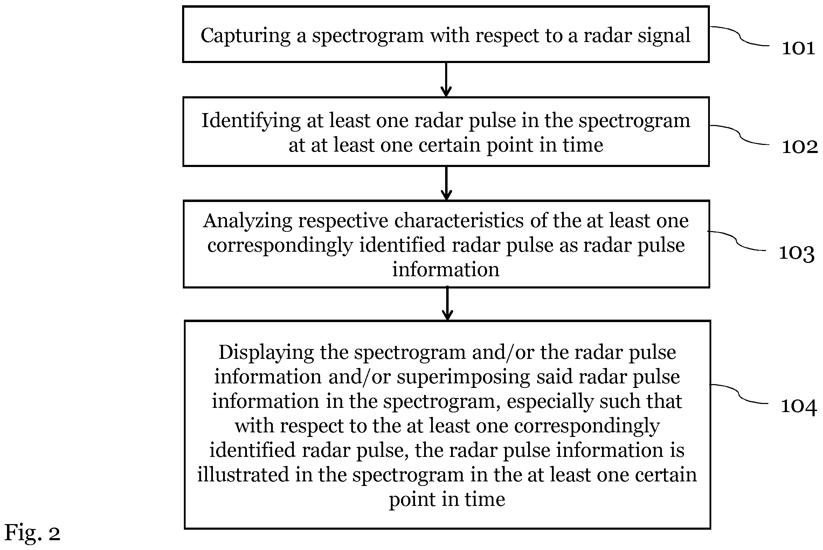

Now, with respect to Fig. 2, a flow chart of an exemplary embodiment of a method for radar pulse analysis with respect to a radar signal is depicted.

It is noted that it might be particularly advantageous if said method uses a device for radar pulse analysis with respect to a radar signal, such as the device 10 according to Fig. 1.

A first step 101 comprises capturing a spectrogram with respect to the radar signal. Said step 101 can exemplarily be performed with the aid of a spectrogram capturing unit such as the spectrogram capturing unit 11 according to Fig. 1.

A second step 102 comprises identifying at least one radar pulse in the spectrogram at at least one certain point in time. A third step 103 comprises analyzing respective characteristics of the at least one correspondingly identified radar pulse as radar pulse information. Said steps 102 and 103 can exemplarily be performed with the aid of an analyzing unit such as the analyzing unit 12 according to Fig. 1.

A fourth step 104 comprises displaying the spectrogram and/or the radar pulse information and/or superimposing said radar pulse information in the spectrogram, especially such that with respect to the at least one correspondingly identified radar pulse, the radar pulse information is illustrated in the spectrogram in the at least one certain point in time. Said step 104 can exemplarily be performed with the aid of a display unit such as the display unit 13 according to Fig. 1.

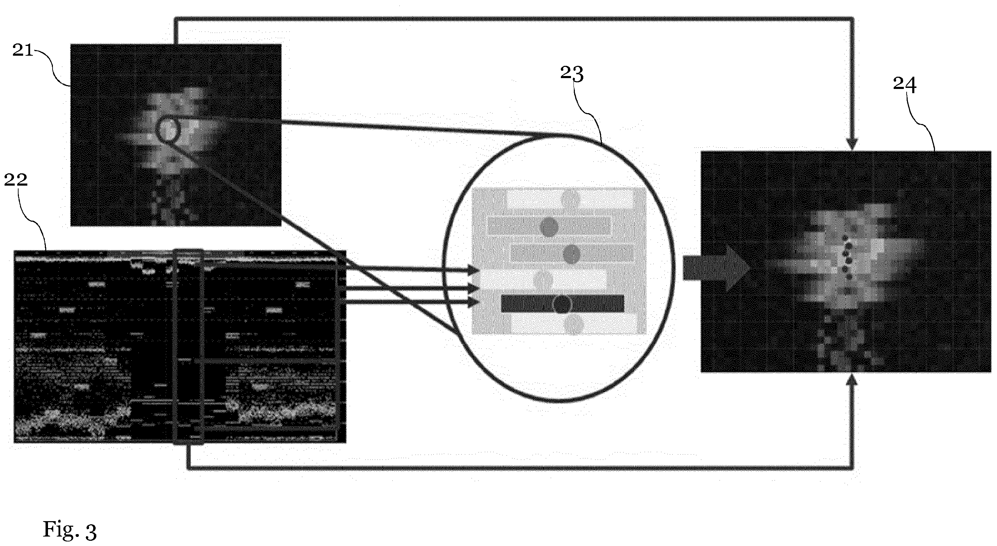

Finally, Fig. 3, Fig. 4, and Fig. 5 show illustrations for further illuminating the functioning of the device according to Fig. 1 or the method according to Fig. 2, respectively.

Fig. 3 illustrates an exemplary spectrogram 21, which has been captured. For instance, an x-axis of said spectrogram 21 may comprise frequency, whereas a y-axis of said spectrogram 21 may comprise time.

Furthermore, said Fig. 3 depicts an exemplary result 22 of a time domain analysis, which has been performed. Especially based on said result 22 of the time domain analysis, radar pulse information 23, exemplarily comprising respective characteristics of at least one correspondingly identified radar pulse, can be obtained.

Said radar pulse information 23 can be superimposed and/or drawn in the spectrogram 21 exemplarily to form an added information spectrogram 24.

Accordingly, the spectrogram 21 can especially be seen as an original spectrogram, whereas the added information spectrogram 24 can especially be seen as a new spectrogram.

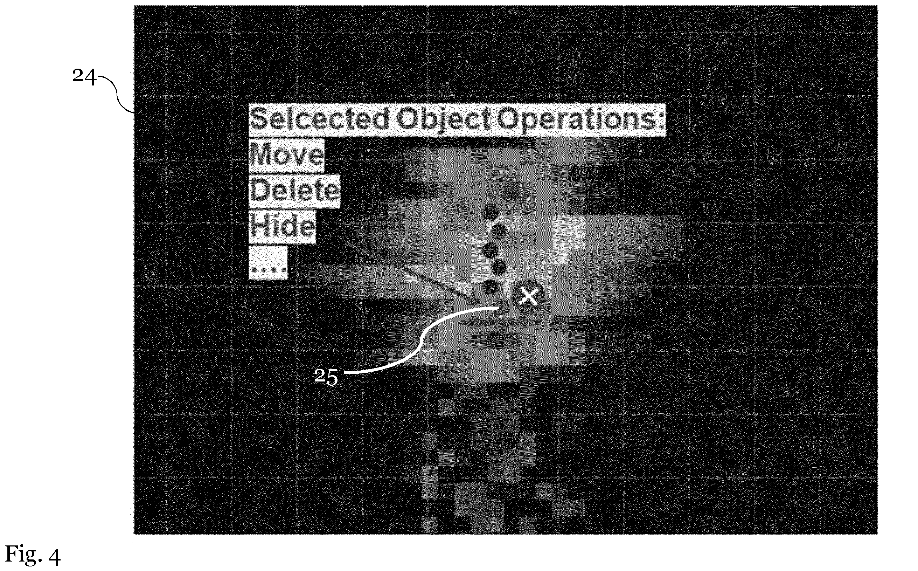

In accordance with Fig. 4, parts of the added information spectrogram 24, said parts especially being based on the radar pulse information 23, can be selectable. Preferably, said selectable parts can comprise individual objects. For instance, as it can further be seen from said Fig. 4, an object 25 of the selectable parts is selected or graphically marked, respectively. Further exemplarily, said selected object 25 can be edited, especially moved, deleted, hidden, preferably by a user or an operating system.

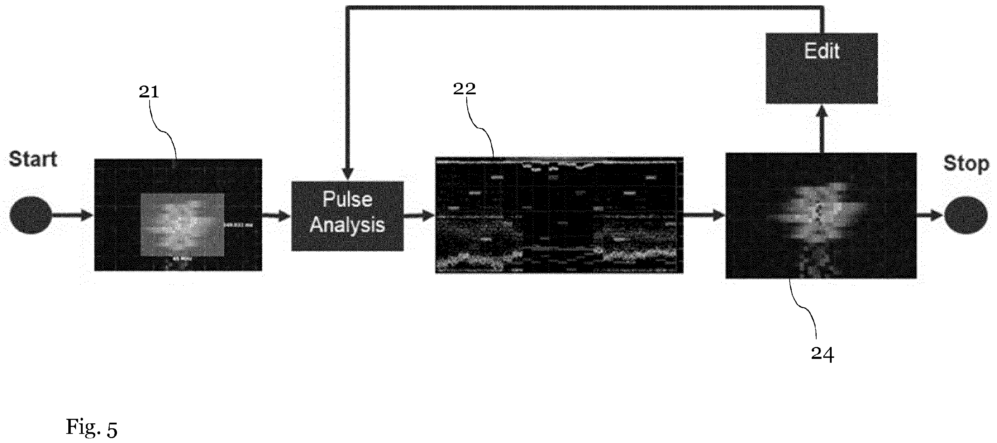

Finally, as illustrated by Fig. 5, after having edited the selected object 25, the pulse analysis or radar pulse analysis, respectively, can be performed again or in an iterative manner, preferably based on the selectable parts and/or the selected object 25 and/or the selected object 25 having been edited, especially by a user or an operating system.

Advantageously, a user can run the pulse analysis again and, for example, trigger an emitter detection to see how it changes as a result of the corresponding modifications.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A device (10) for radar pulse analysis with respect to a radar signal, comprising:
a spectrogram capturing unit (11) configured to capture a spectrogram (21) with respect to the radar signal,
an analyzing unit (12) configured to identify at least one radar pulse in the spectrogram (21) at at least one certain point in time and to analyze respective characteristics of the at least one correspondingly identified radar pulse as radar pulse information (23), and
a display unit (13) configured to display the spectrogram (21) and/or the radar pulse information (23) and/or to superimpose said radar pulse information (23) in the spectrogram (21), especially such that with respect to the at least one correspondingly identified radar pulse, the radar pulse information (23) is illustrated in the spectrogram (21) in the at least one certain point in time.

2. The device (10) according to claim 1,
wherein the analyzing unit (12) and/or the display unit (13) is configured to stretch the spectrogram (21) in time, especially in an area of the at least one certain point in time, preferably before the spectrogram (21) and/or the radar pulse information (23) is displayed and/or the radar pulse information (23) is superimposed in the spectrogram (21) .

3. The device (10) according to claim 1 or 2,
wherein the analyzing unit (12) is configured to form an added information spectrogram (24) comprising the spectrogram (21) and the radar pulse information (23), preferably wherein said radar pulse information (23) is superimposed in said spectrogram (21), more preferably wherein said radar pulse information (23) is superimposed in said spectrogram (21) such that with respect to the at least one correspondingly identified radar pulse, the radar pulse information (23) is illustrated in the spectrogram (21) in the at least one certain point in time.

4. The device (10) according to claim 3,
wherein the analyzing unit (12) is configured to substitute the spectrogram (21) with the added information spectrogram (24), preferably before the spectrogram is displayed.

5. The device (10) according to claim 3 or 4,
wherein the analyzing unit (12) is configured to store the added information spectrogram (24), especially with the aid of a memory.

6. The device (10) according to any of the claims 3 to 5, wherein the analyzing unit (12) is configured to output the added information spectrogram (24), especially with the aid of an interface.

7. The device (10) according to any of the claims 3 to 6, wherein the added information spectrogram (24) is formed such that the added information spectrogram (24) is an augmentation and/or decluttering and/or denoising and/or rearrangement of the spectrogram (21) and/or the radar pulse information (23).

8. The device (10) according to any of the claims 3 to 7, wherein the analyzing unit (12) is configured to process and/or post-process the added information spectrogram (24).

9. The device (10) according to claim 8,
wherein the added information spectrogram (24) is processed and/or post-processed based on pattern recognition.

10. The device (10) according to claim 8 or 9,
wherein the added information spectrogram (24) is processed and/or post-processed based on a machine-learned model.

11. The device (10) according to any of the claims 1 to 10, wherein at least a part of the spectrogram (21) and/or the radar pulse information (23) is selectable, especially such that the analyzing unit (12) is configured to form selected information (25) if at least a part of said selectable part is selected by a user or an operating system.

12. The device (10) according to claim 11,
wherein the analyzing unit (12) is configured to process and/or post-process the selected information (25), especially based on pattern recognition and/or a machine-learned model.

13. The device (10) according to claim 11 or 12,
wherein the spectrogram capturing unit (11) is configured to capture again a spectrogram with respect to the radar signal based on the selected information (25).

14. The device (10) according to any of the claims 11 to 13,
wherein the analyzing unit (12) is configured to identify again at least one radar pulse in the spectrogram at at least one certain point in time and to analyze respective characteristics of the at least one correspondingly identified radar pulse as radar pulse information, especially based on the selected information (25).

15. A method for radar pulse analysis with respect to a radar signal, comprising the steps of:
capturing (101) a spectrogram with respect to the radar signal,
identifying (102) at least one radar pulse in the spectrogram at at least one certain point in time,
analyzing (103) respective characteristics of the at least one correspondingly identified radar pulse as radar pulse information, and
displaying (104) the spectrogram and/or the radar pulse information and/or superimposing said radar pulse information in the spectrogram, especially such that with respect to the at least one correspondingly identified radar pulse, the radar pulse information is illustrated in the spectrogram in the at least one certain point in time.
